# EUROPEAN PATENT SPECIFICATION

(11) **EP 4 149 887 B1**
(45) Date of publication and mention of the grant of the patent: **09.07.2025**
(21) Application number: 21723995.3
(22) Date of filing: 12.05.2021
(51) Int. Cl.: C01F 11/18, B02C 23/06, C08K 3/26, C08K 9/08, C09C 1/02, C09C 3/00, C09C 3/04, C09D 17/00

(54) **BIOCIDE FREE PIGMENT DISPERSIONS AND METHODS OF PREPARING THEM**
BIOZIDFREIE PIGMENTDISPERSIONEN UND VERFAHREN ZU IHRER HERSTELLUNG
DISPERSIONS DE PIGMENT EXEMPTES DE BIOCIDE ET LEURS MÉTHODES DE PRÉPARATION

(30) Priority: 13.05.2020 EP 20174307
(43) Date of publication of application: 22.03.2023
(73) Proprietor: BASF SE, 67056 Ludwigshafen am Rhein (DE)
(72) Inventor: BOHLANDER, Ralf, 40589 Düsseldorf-Holthausen (DE); UENER, Ahmet, 67056 Ludwigshafen (DE); FESSENBECKER, Achim, 67056 Ludwigshafen (DE)
(74) Representative: BASF IP Association
(86) International application number: PCT/EP2021/062603
(87) International publication number: WO 2021/228928

(56) References cited:
- EP-A1- 2 712 895
- EP-B1- 2 712 895
- WO-A1-2013/144137
- WO-A1-2019/108175

## Description

### Field of the Invention

The present invention relates to aqueous pigment suspensions in alkaline environment containing at least one particulate white pigment. Also included in the invention is a method of preparing the aqueous pigment suspensions, a treatment system for producing a biocide free aqueous pigment suspension and the use of said treatment system for this purpose.

### Background of the Invention

White pigment suspensions are typically prepared by dispersing ground or precipitated pigments into an aqueous liquid or wet grinding pigments in an aqueous fluid. Typical white pigments include calcium hydroxide, calcium carbonate, kaolin, china clay, talc and titanium dioxide. A particularly important white pigment is calcium carbonate. Such aqueous pigment suspensions may be used in a wide variety of applications including the manufacture of many products such as in paper, card or other paper products, plastics, paint or other coatings. Aqueous dispersions of pigments are generally used to contribute to the mechanical and optical properties of the products into which they are applied.

It is common practice to employ dispersants to help stabilise the aqueous suspensions of the pigment. A wide variety of dispersants are known for dispersing and/or stabilising aqueous suspensions of pigments so as to reduce or prevent the settling of pigment particles in suspension. Such dispersants include, for instance, silicates or phosphates, phosphonates or oligomeric species carrying functional groups.

It is well known to use polymers for dispersing and stabilising pigments in suspension. Polymeric dispersing agents may be natural, seminatural or synthetic. Such polymers usually carry ionic groups and often have relatively low molecular weights. Examples of natural or seminatural polymers include products derived from natural polymers such as starch or cellulose, for instance de-polymerised carboxylated cellulose.

DE 10311617 A1 describes the use of polyacrylic acids having a mean molecular weight of 5000 to 30,000 g/mol and sulphur -containing organic end groups which have been at least partially neutralised with an alkali metal hydroxide or ammonium as grinding auxiliaries for producing calcium carbonate suspensions.

US 4840985 describes partly neutralised acrylic acid polymer is as a grinding auxiliary for the preparation of aqueous mineral suspensions which are used as pigment suspensions. 40% to 80% of the acid groups of acrylic acid polymer is have been neutralised with alkali metal ions, ammonium ions or polyvalent cations.

US 5432238 and 5432239 each describe polymers and copolymers of acrylic acid which have been neutralised with magnesium ions and sodium ions as grinding and dispersing auxiliary for preparation of mineral suspensions. According to US 5432238, for this purpose, a polymer fraction obtained by fractionation and having a specific viscosity of 0.3 to 0.8 and a weight average molecular weight of 1000-10,000 g/mol is used.

US 7956211 discloses the preparation of polyacrylic acids having low polydispersity index (PDI) using sulphur containing organic molecular weight regulators by RAFT polymerisation. The products can be used as grinding against for aqueous mineral suspensions.

EP 1074293 discloses phosphonate terminated polyacrylic acid and having a molecular weight Mw of 2000 to 5800 g/mol as a dispersant for the production of aqueous slurries of calcium carbonate, kaolin, clay, talc and metal oxides having a solids content of at least 60 wt %.

WO 2010/063757 discloses process for manufacturing calcium carbonate materials having a particle surface with improved absorption properties using at least one lithium ion containing compound.

EP 2712895A1 discloses a rheologically stable aqueous mineral material suspension comprising a) at least one mineral material, and b) at least one polymer of acrylic and/or methacrylic acid, wherein the at least one polymer of acrylic and/or methacrylic acid is obtained by polymerisation of acrylic and/or methacrylic acid monomer(s) in water using a compound of formula (I) 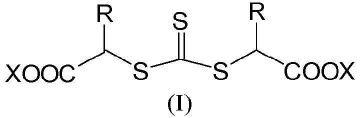 wherein X represents Li, Na, K, or H, and R represents an alkyl chain comprising 1 to 5 carbon atoms, and the compound of formula (I) is used in an amount of from 0.1 to 2.5 wt.% based on the weight of said monomer(s); has a weight molecular weight MW of from 800 to 8000 g/mol; a polydispersity index 1p in the range from 2 to 3; and wherein the aqueous mineral material suspension has a content of volatile organic compounds (VOC) of ≤ 20 mg/kg, as well as the preparation process and uses thereof.

WO2019/108175 A1 describes a biocide add ammonia free aqueous polymer dispersion which is obtained by radically initiated multistage emulsion polymerisation and comprising particles comprising at least a first polymer phase formed from a monomer composition I and a second polymer phase from a different monomer composition II. The first polymer phase has a glass transition temperature below 20°C, and the second polymer phase has a glass transition temperature above 20°C, both as determined by differential scanning calorimetry according to ISO 16805. The polymer dispersion further comprises at least one water-soluble alkali metal silicate, at least one water-soluble alkali metal or alkaline earth metal alkyl siliconate, or mixtures thereof and has a pH of 10.0 or higher.

WO 2013/144137 sets out to provide a method for preparing calcium carbonate suspensions having a reduced content of latex-based binder. This reference also has the objective of preparing such calcium carbonate suspensions such that an obtained paper coating formulation has a rheology that is stable over time in the presence of sodium silicate and/or sodium hydroxide. This is said to be achieved by preparing an aqueous calcium carbonate suspension that involves providing a calcium carbonate containing material as an aqueous cake or suspension with a solids content of at least 45 wt.% based on the total weight of aqueous cake or suspension; providing at least one alkali metal salt of a phosphonic acid in an amount from 0.01 to 5 wt.-%, based on the total dry weight of calcium carbonate; providing at least one phosphonic acid in an amount from 0.001 to 0.5 wt.-%, based on the total dry weight of calcium carbonate. The calcium carbonate is contacted with the at least one alkali metal salt of phosphonic acid so as to obtain a suspension having a pH from 10 to 14; then contacting this suspension with at least one phosphonic acid in order to obtain a suspension of pH from 8 to 10; followed by optionally grinding the suspension.

CN 105836782 A provides preparing a calcite type calcium carbonate, comprising the steps of: (1) adding to a carbonate solution any of the following solutions including a silicate solution, a mixed solution of silicate solution and a water-soluble polymer solution, or mixed solution of silicate solution and a surfactant solution and then adding a calcium salt solution and mixing; (2) the pH of the reaction liquid obtained in step (1) is adjusted to 10-13, preferably 11-12, more preferably 11.5; (3) resting the reaction; and (4) filtering and drying. The concentration of the carbonate solution is said to be 400-1500 mg/L, preferably 800-1000 mg/L, more preferably 960 mg/L. The concentration of silicate solution is said to be 100-300 mg/L, preferably 120-180 mg/L, more preferably 150 mg/L. The concentration of the calcium salt solution is 400-800 mg/L, preferably 500-700 mg/L, more preferably 640 mg/L. The ratio of the amount of calcium ions to carbonate ions is 1:2 to 2:1, preferably 1:1.5 to 1:1, more preferably 1:1.2. The concentration of water-soluble polymer solution is 10-1000 mg/L and the concentration of the surfactant solution is 10-200 mg/L. Water-soluble polymer is said to be a partially hydrolysed polyacrylamide having a degree of hydrolysis of 25-35%, preferably 28 to 32%, more preferably 31% and the molecular weight of the hydrolysed polyacrylamide is said to range from 500 to 25 million, preferably from 9 to 19 million, more preferably 15 million.

US 2018/0282172 describes a method of preparing precipitated calcium carbonate aqueous suspensions by employing a method that involves slaking a calcium oxide containing material in water in the presence of at least one copolymer. The copolymer is said to be obtained by the polymerisation of maleic anhydride and of styrene, which may or may not be functionalised.

US 2019/0276568 sets out to provide calcium carbonate suspensions which have a low viscosity and very good pumpability even after a storage time of 3 weeks. The suspensions employ acrylic acid polymer is having a weight average molecular weight of 3500 to 12,000 g/mole and a narrow molecular weight distribution in which 30% to 6% of the acid groups have been neutralised with calcium ions, 30 to 70% of the acid groups have been neutralised with sodium ions and not more than 10% of the acid groups have not been neutralised.

Aqueous suspensions of white pigments, for instance calcium carbonate (PCC or GCC), calcium hydroxide, kaolin, china clay, talc, titanium dioxide, are prone to develop microbial growths which can contaminate the pigment suspensions and significantly impair their desired function and/or stability. This can be the case, for instance, when the white pigments are used in the manufacture of paper products, paints etc., where such microbial contaminated white pigments may have impaired colour and other optical properties and indeed could contaminate the products in which they are used. Typically, such aqueous white pigment suspensions may be treated with biocides in order to prevent such microbial colonies from developing.

Biocides are essentially substances regulated under EU biocide reg 528/2012 which includes 21 categories. Typical biocides for white pigment dispersions would include category 6 (in can conservation), 7 (coatings) and 10 (wall, construction).

Examples of biocides often used in white pigment dispersions include Isothiazolinones (e.g. MIT, BIT, CIT, OIT) which would typically be added in the range of 20-800 ppm, Alcohols (e.g. phenoxy, propyl) often used in an amount of 0.1-5%, Aldehydes or aldehyde releasing substances (e.g. formaldehyde, glutaraldehyde) often used in the concentration of 5-50 ppm (such compounds are often not stable in alkaline media), Quaternary ammonium compounds, often used at a concentration of 0.2-5%, Chlorine, Iodine free or releasing agents, which are often added at a concentration of 1-20 ppm, Peroxides (including for instance peracetic compounds) which tend not to be stable in alkaline media for very long, silver, copper or tin compounds and salts, which are often used at a concentration of around 20 ppm.

1, 2-Benzisothiazolinone-3-on is a frequently used biocide in commonly used biocidal formulations. However, this biocide tends to be disadvantageous in that the substance has a biocidal effect against many bacteria but nevertheless has a lower effectiveness against certain other bacteria, for instance pseudomonas. In addition, this compound can be dangerous for users. Another frequently used biocide includes mixtures of 5-chloro-2-methyl-4-isothiazolinon and 2-methyl-4-isothiazolinone. Such a mixture has the disadvantage that only 5-chloro-2-methyl-4-isothiazolinon would have sufficient efficacy against bacteria but this substance tends to be very unstable when exposed to alkaline pH and heat which results in rapid loss of effectiveness.

US 9029448 describes the preparation of an aqueous suspension of mineral matter by dispersion and/or grinding in the presence of at least one amine and one vinyl-carboxylic polymer, with the amine allowing to reduce the amount of the polymer and the use of the resulting suspension. An example of amine implementation according to this reference is said to be the use of 2-amino-2-methyl-1-propanol, CAS #124-68-5.

DE 10027588 A1 discloses o-phenylphenol and its alkaline salts as preservation agents which are stable in alkaline environments and effective against many bacteria but tend to have the disadvantage that the antibacterial effect is long lasting and can prove disadvantageous for subsequent use.

In fact, the use of biocides has many disadvantages, for instance danger to humans and/or the environment. Furthermore, processes of decontaminating aqueous suspensions of pigment can prove costly and, in some cases, difficult to incorporate in a process to manufacture pigment suspensions. In addition, even with the use of traditional biocides bacterial growths may still develop over time in the aqueous pigment suspensions.

US 2009/0120327 sets out to solve this problem by providing a process which involves a first stage of increasing the OH⁻ ion concentration of the said aqueous dispersion and/or suspensions to a value greater or equal to 1 x 10⁻² mole/l. This process also involves a stage of dispersion and/or grinding of the said aqueous dispersions and/or suspensions occurring after this first stage. The process also includes an optional stage of reducing the OH⁻ ion concentration of the said aqueous dispersions and/or suspensions after the first stage, to a value less than or equal to 1 x 10⁻² mole/l and an optional stage of adding at least one substance with a microbial effect and/or use of a physical decontamination process occurring before, during or after at least one of the previous 3 stages.

A similar process is described in US 2014/0000486.

Raising the pH by increasing the OH⁻ ion concentration by the addition of strong alkalis high enough to provide acceptable minimisation of microbial growth can prove difficult to control and maintain.

The present invention addresses the technical problem of providing an aqueous white pigment suspension which is both resistant to bacterial growths and overcomes the aforementioned disadvantages of employing biocide in such white pigment suspensions. The invention also addresses the need in industry for biocide free white pigment suspensions which exhibit effective biocidal activity against bacterial infections.

### Summary of the Invention

In a first aspect of the present invention we provide an aqueous pigment suspension in alkaline pH environment comprising:
a) at least one particulate white pigment;
b) at least one acrylic acid polymer, including salts thereof, having a weight average molecular weight Mw in the range from 1000 to 12,000 g/mol;
c) at least one alkali metal silicate; and
in which the aqueous pigment suspension has a pH in the range from 10 to below 12 and a solids content of at least 50 wt.-%, based on the total weight of the aqueous pigment suspension.

Another aspect of the present invention provides a method for producing an aqueous pigment suspension defined in the first aspect of the present invention, comprising the steps of:
combining with water:
i) the at least one particulate white pigment in an amount sufficient to provide a solids content of at least 50 wt.-%; based on the total weight of the aqueous pigment suspension
ii) at least one acrylic acid polymer, including salts thereof, having a weight average molecular weight Mw in the range from 1000 to 12,000 g/mol;
iii) at least one alkali metal silicate; and
iv) optionally sodium hydroxide and/or potassium hydroxide
in which i), ii), iii) and optionally iv) can be added in any order or in any combination and in which the amounts of iii) and optionally iv) are sufficient to provide a pH in the range from 10 to below 12.

A further aspect of the present invention concerns a treatment system for producing a stable aqueous pigment suspension resistant against bacterial growths,
in which the aqueous pigment suspension comprises at least one particulate white pigment a pH in the range from 10 to below 12 and has a solids content of at least 50 wt.-%, based on the total weight of the aqueous pigment suspension,
and in which the treatment system comprises:
   A) at least one acrylic acid polymer, including salts thereof, having a weight average molecular weight Mw in the range from 1000 to 12,000 g/mol;
   B) at least one alkali metal silicate; and
   C) optionally sodium hydroxide and/or potassium hydroxide.

A still further aspect of the present invention relates to the use of a treatment system for producing a stable aqueous pigment suspension resistant against bacterial growths,
in which the aqueous pigment suspension comprises at least one particulate white pigment a pH in the range from 10 to below 12 and has a solids content of at least 50 wt.-%, based on the total weight of the aqueous pigment suspension,
and in which the treatment system comprises:
   A) at least one acrylic acid polymer, including salts thereof, having a weight average molecular weight Mw in the range from 1000 to 12,000 g/mol;
   B) at least one alkali metal silicate; and
   C) optionally sodium hydroxide and/or potassium hydroxide.

The inventors discovered that the inventive aqueous white pigment suspensions as defined herein possess high stable resistance to bacterial growth and contamination. Furthermore, the invention provides such convenient aqueous white pigment suspensions having bacterial resistance by employing readily available and inexpensive additives.

### Detailed Description of the Invention

The white pigment used in the aqueous white pigment suspensions according to the present invention may be any suitable white pigments that are typically inorganic. Such white pigments may be those typically used in a variety of applications such as in the manufacture of plastics, paint, other coating compositions, paper or paper products, including filler type pigments that are added into the wet end of the papermaking process or pigments that are used in coatings applied to paper or paper products and typically applied as coating colour compositions. Suitably the white pigment may be selected from any of the group consisting of calcium hydroxide, calcium carbonate, kaolin, china clay, talc and titanium dioxide. The invention is particularly suitable for aqueous calcium carbonate suspensions. Thus, it is preferred that the white pigment is calcium carbonate. The calcium carbonate may be either precipitated calcium carbonate (PCC) or ground calcium carbonate (GCC). Preferably, however, the calcium carbonate is ground calcium carbonate (GCC).

The present invention relates to an aqueous pigment suspension having a solids content of at least 50% by weight, based on the total weight of the aqueous pigment suspension. Such suspensions are typically regarded as high solids suspensions. Suitably the solids content of the aqueous pigment suspension is in the range of from 50 wt.-% to 90 wt.-%, based on the total weight of the aqueous pigment suspension. Preferably the solids content lies in the range of from 60 wt.-% to 85 wt.-%, more preferably from 65 wt.-% to 85 wt.-%, still more preferably from 70 wt.-% to 80 wt.-% and most preferably from 72 wt.-% to 78 wt.-%. All of these ranges are applicable to each of the aforementioned white pigments and especially applicable in accordance with the present invention to aqueous pigment suspensions where the white pigment is calcium carbonate.

The aqueous white pigment suspension includes at least one acrylic acid polymer, including salts thereof, having a weight average molecular weight Mw in the range from 1000 to 12,000 g/mol. This polymer typically facilitates the dispersing and/or grinding of the white pigment when forming the aqueous pigment suspension and importantly maintaining the stability of the so formed aqueous pigment suspension. This is the case for any of the aforementioned white pigments and particularly specifically when the white pigment is calcium carbonate. This acrylic acid polymer, or salts thereof, enables the aqueous pigment suspension to have a low viscosity, remain storage stable and still be pumpable after storage.

Suitably, the weight average molecular weight should lie in the range of from 2000 to 10,000 g/mol, preferably from 2500 to 9000 g/mol, more preferably from 3000 to 8500 g/mol, still more preferably from 3500 to 8000 g/mol, particularly from 3500 to 7500 g/mol, and most preferably from 4000 to 7000 g/mol.

The acrylic acid polymers according to the present invention may be obtained by free radical polymerisation of acrylic acid, optionally with comonomers. It is possible to employ any known free radical polymerisation method for preparation of polyacrylic acids. Preference is given to solution polymerisation in water, in an organic solvent or in a mixture of water and an organic solvent. Particular preference is given to polymerisation in water. The acrylic acid polymers may have a narrow molecular weight distribution. Suitably the acrylic acid polymer having a narrow molecular weight distribution can be obtained by fractionation of the acrylic acid polymers obtained, for example by sedimentation. The acrylic acid polymers obtained may be neutralised with any suitable base, for instance alkali metal hydroxides, alkaline earth metal hydroxides or ammonium hydroxide. Thus, the acrylic acid polymer or salts of the acrylic acid polymer, for instance obtained by partial or full neutralisation, may be used in the inventive aqueous white pigment suspensions.

Desirably, the at least one acrylic acid polymer employed in the aqueous pigment suspension is a homopolymer of acrylic acid, including salts thereof, and having a polydispersity index Mw/Mn ≤ 3, preferably ≤ 2.5.

In general, aqueous solutions of acrylic acid polymers having a narrow molecular weight distribution may for instance be obtained by polymerisation of acrylic acid in feed mode with a free radical initiator in the presence of a chain transfer agent in water as solvent.

Suitable polymerisation initiators may be known initiators, for example inorganic or organic per compounds, such as peroxodisulfates, peroxides, hydroperoxides and peresters, ether compounds such as 2, 2'-azobisisobutyronitrile, and redox systems with organic and inorganic components. Preferred initiators are peroxodisulfates and hydrogen peroxide.

Chain transfer agents that may be used in the preparation of the acrylic acid polymer is include sulfur containing and phosphorus containing chain transfer agents. Preference is given to mercaptoethanol, bisulfite and hypophosphite. A particularly preferred chain transfer agent is hypophosphite.

Hypophosphite may be used in the form of hypophosphorous acid or in the form of salts of hypophosphorous acid. Preference may be given to a polymerisation in feed mode which enables minimisation of residual content of the chain transfer agent in the polymer solution. Suitable feed methods are described in WO 2012/104401 and WO 2012/104304.

It is preferred that the acrylic acid polymer employed in the present invention is at least partially neutralised. Typically, a partially or fully neutralise acrylic acid polymer is obtained by adding a suitable base to the acrylic acid polymer. Partially neutralised means that only some of the carboxyl groups present in the acrylic acid polymer are in solid form. Generally, sufficient base is added to ensure that the pH is subsequently in the range of 3 to 8.5, preferably 4 to 8.5, in particular 4.0 to 5.5 (partly neutralised), or 6.5 to 8.5 (completely neutralised). The base used is preferably aqueous sodium hydroxide solution, it is also possible to employ ammonia or amines, for example triethanolamine.

The thus achieved degree of neutralisation of the polyacrylic acid obtained is between 15% and 100%, preferably between 30% and 100%. The neutralisation is generally effected over a relatively long period of, for example, 0.5 to 3 hours in order that the heat of neutralisation be readily removed.

In another particularly desirable for the at least one acrylic acid polymer used in accordance with the present invention is or may be derived from acrylic acid polymer having 30 to 60% of the acid groups of the at least one acrylic acid polymer being neutralised with calcium ions, 30% to 70% of the of the at least one acrylic acid polymer having been neutralised with sodium ions and 0% to 50%, preferably 0% to 20%, more preferably 0% to 10%, of the acid groups of the acrylic acid polymer not neutralised.

The amount of at least one acrylic acid polymer, including salts thereof, having a weight average molecular weight Mw in the range from 1000 to 12,000 g/mol included in the aqueous white pigment suspension is desirably from 0.05 - 1 wt.-% or 0.02 - 0.7 wt.-%, based on the dry weight of the white pigment.

The aqueous pigment suspension of the present invention should have a pH in the range from 10 to below 12. Suitably, the pH should be from 10.5 to 11.9, desirably from 10.5 to 11.8, preferably 11 to 11.8, more desirably from 11.1 to 11.7, more preferably from 11.1 to 11.6, more preferably still from 11.1 to 11.5 or from 11.1 to 11.4, particularly from 11.2 to 11.4. Desirably, this pH may be achieved by addition of the at least one alkali metal silicate in a suitable amount. Suitably, the amount of silicate to the solids content of white pigment is in the range from 0.1 to 1% by weight, preferably from 0.2 to 0.4% by weight. This can easily be achieved by the adding to the aqueous white pigment suspension alkali metal silicate in the form of an aqueous solution. Typically, aqueous alkali metal silicate solutions are manufactured in a molar ratio range of from 1 to 4 corresponding to an active concentration of alkali metal silicate of from 20 to 58% by weight. The equivalent silicate (anion) content range would be from 15% to 40% by weight. The preferred range of molar ratio would be from 1.7 to 2.8 and more preferably from 2 to 2.4. This corresponds to a preferred range of silicate (anions) of from 25 to 35%.

This pH may be achieved by employing at least one alkali metal silicate or may be achieved by employing at least one alkali metal silicate and at least one strong alkali. Preference is given to the addition of at least one alkali metal silicate as the only pH adjustment agent. Thus, in this case the pH adjustment would be achieved by employing at least one alkali metal silicate in the absence of any added alkali metal hydroxide. The fact that the pH of the aqueous white pigment suspension could be adjusted to the desired range by the use of at least one alkali metal silicate alone was quite unexpected.

Desirably the at least one alkali metal silicate may be lithium silicate and/or sodium silicate and/or potassium silicate. Preferably sodium silicate is employed.

In some cases, it may be desirable to employ the at least one alkali metal silicate as well as the at least one strong alkali. Suitably the at least one strong alkali should be either sodium hydroxide and/or potassium hydroxide. It may be desirable also to use precursors of such compounds which generate sufficient sodium hydroxide on addition to the aqueous pigment suspension.

Preferably, the aqueous pigment suspension according to the present invention may be substantially free of biocide. By biocide we mean a chemical substance or microorganism intended to destroy, deter, render harmless or insert a controlling effect on any harmful or undesirable organism. In the case of the present invention biocide we mean a substance that would normally be applied to and aqueous pigment suspension which is specifically designed to reduce or prevent the growth of unwanted bacteria. By substantially free of biocide we mean that no or at least insufficient concentration of said biocide is added to or included in the aqueous pigment suspension that would normally be required to reduce or prevent the growth of bacteria. This would desirably mean substances regulated under EU Biocide Reg 528/2012 of the 21 categories which would be either not applied or included or at least present in an amount below the minimum concentration that would normally be required to be effective. Preferably this would mean substances in category 6 (in can conservation); category 7 (coatings); or category 10 (wall, construction).

As given above, examples of biocides often used in white pigment dispersions include Isothiazolinones (e.g. MIT, BIT, CIT, OIT) which would typically be added in the range of 20-800 ppm, Alcohols (e.g. phenoxy, propyl) often used in an amount of 0.1-5%, Aldehydes or aldehyde releasing substances (e.g. formaldehyde, glutaraldehyde) often used in the concentration of 5-50 ppm (such compounds are often not stable in alkaline media), Quaternary ammonium compounds, often used at a concentration of 0.2-5%, Chlorine, Iodine free or releasing agents, which are often added at a concentration of 1-20 ppm, Peroxides (including for instance peracetic compounds) which tend not to be stable in alkaline media for very long, silver, copper or tin compounds and salts, which are often used at a concentration of around 20 ppm. All concentrations are on the basis of weight of biocide on weight of aqueous pigment suspension. The present invention enables aqueous white pigment suspensions to be produced that are resistant to or have reduced tendency for microbial growth.

Preferably, the aqueous white pigment suspension according to the present invention is substantially resistant to microbial growths.

In the method for producing an aqueous suspension of white pigment according to the present invention the steps involve combining with water:
i) the at least one particulate white pigment in an amount sufficient to provide a solids content of at least 50 wt.-%; based on the total weight of the aqueous pigment suspension;
ii) at least one acrylic acid polymer, including salts thereof, having a weight average molecular weight Mw in the range from 1000 to 12,000 g/mol;
iii) at least one alkali metal silicate; and
iv) optionally sodium hydroxide and/or potassium hydroxide.

Each of the steps i), ii), iii) and optionally iv) can be carried out in any order or in any combination. It is important that the amounts of iii) and optionally iv) added is/are sufficient to provide a pH in the range from 10 to below 12.

In one suitable embodiment of the inventive method
i) the at least one particulate white pigment in an amount sufficient to provide a solids content of at least 50 wt.-%; based on the total weight of the aqueous pigment suspension; and
ii) at least one acrylic acid polymer, including salts thereof, having a weight average molecular weight Mw in the range from 1000 to 12,000 g/mol
are combined with water to form an initial suspension.

In this suitable embodiment steps iii) and optionally iv) are performed subsequent to forming the above-mentioned initial suspension. Desirably when the method includes step iv) the pH of the initial suspension will be adjusted by addition of the iv) sodium hydroxide and/or potassium hydroxide and the iii) at least one alkali metal silicate in either order or simultaneously to provide the aqueous pigment suspension having a pH of from 10 to below 12.

Where step iv) is employed it is generally preferred to add the sodium hydroxide and/or potassium hydroxide to the initial suspension to form a pH adjusted suspension having a pH of at least 9.5 before adding the alkali metal silicate. Thus, in such embodiment the pH of the initial suspension is adjusted to a pH of at least 9.5 by the addition of the iv) sodium hydroxide and/or potassium hydroxide to form a pH adjusted suspension. To this pH adjusted suspension the iii) at least one alkali metal silicate is added in an amount to provide the aqueous pigment suspension having a pH of from 10 to below 12.

Nevertheless, in some cases where step iv) is employed it may be desirable to add the alkali metal silicate to the initial suspension to achieve a pH adjusted suspension followed by addition of the sodium hydroxide and/or potassium hydroxide. Thus, in this alternative desirable form the pH of the initial suspension is adjusted to pH of at least 9.5 by addition of the iii) at least one alkali metal silicate to form a pH adjusted suspension. To this pH adjusted suspension the iv) sodium hydroxide and/or potassium hydroxide is added in an amount to provide the aqueous pigment suspension having a pH of from 10 to below 12. However, the inventors have found that where step iv) is employed, it is to adjust the pH of the initial suspension by addition of iv) sodium hydroxide and/or potassium hydroxide and then subsequently employing step iii) at least one alkali metal silicate.

In one form of the invention that includes step iv) sodium hydroxide and/or potassium hydroxide is included the amount of alkali metal silicate added in step iii) should be more than the amount of sodium hydroxide and/or potassium hydroxide in step iv), on a molar basis. Preferably, the molar amount of alkali metal silicate added in step iii) should be at least 10 times greater than the molar amount of sodium hydroxide and/or potassium hydroxide added in step iv).

As already indicated preference is given to achieving pH adjustment by employing step iii) at least one alkali metal silicate and not including step iv) sodium hydroxide and/or potassium hydroxide.

In one preferred embodiment of the inventive method
i) the at least one particulate white pigment in an amount sufficient to provide a solids content of at least 50 wt.-%; based on the total weight of the aqueous pigment suspension; and
ii) at least one acrylic acid polymer, including salts thereof, having a weight average molecular weight Mw in the range from 1000 to 12,000 g/mol

are combined with water to form an initial suspension;
wherein the pH of the initial suspension is adjusted to a pH of at least 9.5 by addition of the iii) at least one alkali metal silicate to form a pH adjusted suspension; and the pH adjusted suspension the iv) sodium hydroxide and/or potassium hydroxide is added in an amount to provide the aqueous pigment suspension having a pH of from 10 to below 12.

This method and any preferred embodiments of the method described hereinabove may incorporate any or any combination of the preferred embodiments recited herein in regard to the inventive aqueous pigment suspension.

The inventive treatment system for producing a stable bacteria resistant aqueous pigment suspension described hereinabove may incorporate any of the preferred embodiments recited herein in regard to the inventive aqueous pigment suspension.

The inventive use of the treatment system for producing a bacteria resistant aqueous pigment suspension described hereinabove may incorporate any of the preferred embodiments recited herein in regard to the inventive aqueous pigment suspension.

The inventive use of the treatment system for producing a bacteria resistant aqueous pigment suspension described hereinabove may incorporate any of the preferred embodiments recited herein in regard to the inventive aqueous pigment suspension.

The following examples illustrate the invention.

### Examples

### Example 1

Slurries of ground calcium carbonate (GCC) in water show a "natural" pH from 8.3 to 9 depending upon the naturally occurring calcium carbonate, the degree of crystallinity and fineness of the ground calcium carbonate. Generally, ready-made GCC slurries available on the market are stabilised with biocide additions.

The inventors set out to investigate if bacteria resistant aqueous slurries of calcium carbonate could be achieved conveniently without the need of biocide addition.

Aqueous slurries of GCC including Sokalan^{®} NR 2555 dispersant (acrylic acid homopolymer, sodium salt and having molecular mass Mw of 4,000 to 6,000 g/mol. The slurries exhibited a natural pH of 8.5 and showed a high number of non-added germ colonies in a preliminary test. Even pH adjusted samples of targeted pH 10.5 should measurable number of microbial counts (natural bio contamination) at the time when the sample reached the bio testing laboratory before adding inoculum.

Test mixture preparations were done with standard paint filler type "2" (d50= 2 µm) of Omya works Gummern, which is chemically crystalline marble. The mixture volume was increased to 360 g total weight. To half of the samples 1 g of Sokalan^{®} NR 2555 was added as dispersing agent. For all samples pH adjustments to target level pH were done with different pH regulation chemicals.

### Chemicals used:

AMP^{®} Angus is a primary amine, 100%v as supplied;
Lutron^{®} Q75 is a tertiary amine, 75% as supplied;
Cycloquart^{®} is a quaternary amine base 20% as supplied;
Silres^{®} BS 16 is a potassium siliconate with 25% as supplied siliconate anionic content;
Vetrosil^{®} OF is a potassium silicate with 30% silicate anion content;
Hyporan^{®} 10 is a sodium silicate with 30% silicate anion content.

A part of 200 g was taken thereof tested for the existence of microbial colonies in BASF laboratories.

Description of inoculi used in the test work.

| | | |
|---|---|---|
| Escherichia coli | gram-negative bacteria | pH survival 5-9 |
| Pseudomonas aeruginosa | gram-negative bacteria | pH 5-10.5 |
| Staphylococcus aureus | gram-negative bacteria | pH 5-9.5 |
| Pluribacter gergoviae | gram-negative bacteria | |
| Burokholderia cepacia | gram-negative bacteria | pH 4-10 |

Details of the pH Regulator Additive and Sokalan^{®} NR 2555 addition for the GCC suspension are summarised in Table 1

**Table 1**

| pH regulator | Sokalan^{®} added | Initial slurry pH | Target pH 10.5 | pH regulator amount g/360g | Target pH 11/ actual pH | pH regulator amount g/360g | Sample code |
|---|---|---|---|---|---|---|---|
| AMP^{®} Angus | Yes | 8.4 | | | 11.0 | 2.6 | 1m3 |
| | No | 8.6 | | | 11.0 | 1.6 | 103 |
| None | Yes | 8.5 | | | | | 1m1 |
| NaOH 25% | Yes | 8.6 | 10.7 | 0.05 | | | 1o1 |
| Lutron^{®} Q75 | Yes | 8.3 | | | 10.5 | 37 | 3m3 |
| | No | 8.5 | | | 10.6 | 21 | 3o3 |
| Cycloquart^{®} | Yes | 8.3 | | | 11.0 | 2 | 4m3 |
| | No | 8.6 | | | 11.3 | 1.1 | 4o3 |
| Silres^{®} BS 16 | Yes | 8.3 | | | 11.0 | 1.4 | 5m3 |
| | No | 8.5 | | | 11.0 | 0.7 | 5o3 |
| Vetrosil^{®} OF | Yes | 8.5 | | | 11.0 | 3.1 | 6m3 |
| | No | 8.6 | | | 11.0 | 2.1 | 6o3 |
| Hyporan^{®} 10 | Yes | 8.5 | | | 11.1 | 3.1 | 7m3 |
| | No | 8.6 | | | 11.0 | 1.6 | 7o3 |
| NaOH 25% | Yes | 8.3 | | | 11.0 | 0.2 | 8m3 |
| | No | 8.6 | | | 11.2 | 0.2 | 8o3 |
| KOH 25% | Yes | 8.5 | | | 11.1 | 0.5 | 9m3 |
| | No | 8.6 | | | 11.1 | 0.3 | 9o3 |

It was noted that the alkali metal silicate solutions of equivalent Na₂O or K₂O weight % needed higher additions compared to the pure alkali metal hydroxides. This is believed to be the buffering effect of the poly silicate. It was also noted that a lower volume of sodium silicate (Hyporan^{®}) was needed compared to the potassium silicate (Vetrosil^{®}) in the slurries without acrylate. It was also noted that NaOH 25% volume was less than KOH 25%, due to the higher molarity hydroxyl ion in the sodium hydroxide.

The Results are presented in the following Table 2.

**Table 2**

| Code No. | Pluralibacter gergoviae (ATCC 33028) 470000 CFU/q | | | | | Burkholderia capacia (ATCC 25416) 74000 CFU/g | | | | | Escherichia coli (ATCC 8739) 560000 CFU/g | | | | |
|---|---|---|---|---|---|---|---|---|---|---|---|---|---|---|---|
| Microbe count/ Time | 2d | 7d | 14d | 21d | 28d | 2d | 7d | 14d | 21d | 28d | 2d | 7d | 14d | 21d | 28d |
| 1m1 | Too many germs, test stopped | | | | | | | | | | | | | | |
| 1o1 | 300 KEE/g | | | | | | | | | | | | | | |
| 1m3 | <100 | <100 | <100 | <100 | | <100 | <100 | <100 | <100 | | <100 | <100 | <100 | <100 | <100 |
| 103 | <100 | <100 | <100 | <100 | | <100 | <100 | <100 | <100 | | 400 | <100 | <100 | <100 | <100 |
| 3m3 | <100 | <100 | <100 | <100 | | <100 | | | | | <100 | <100 | <100 | <100 | <100 |
| 3o3 | <100 | <100 | <100 | <100 | | <100 | | | | | <100 | <100 | <100 | <100 | <100 |
| 4m3 | <100 | <100 | <100 | <100 | | <100 | | | | | <100 | <100 | <100 | <100 | <100 |
| 4o3 | 600 | 600 | 800 | 23000 | | 200 | | | | | <100 | <100 | <100 | <100 | <100 |
| 5m3 | <100 | <100 | <100 | <100 | | <100 | | | | | <100 | <100 | <100 | | |
| 5o3 | <100 | <100 | <100 | 480000 | | 900 | | | | | 300 | <100 | <100 | <100 | 320000 |
| 6m3 | <100 | <100 | <100 | <100 | | <100 | | | | | <100 | <100 | <100 | | |
| 6o3 | <100 | <100 | <100 | <100 | | <100 | | | | | 200 | <100 | <100 | | |
| 7m3 | <100 | <100 | <100 | <100 | | <100 | | | | | <100 | <100 | <100 | | |
| 7o3 | <100 | <100 | <100 | 32000 | | <100 | | | | | <100 | <100 | <100 | | |
| 8m3 | 19000 | 31000 | 770000 | 360000 | | <100 | | | | | 470000 | 1900000 | | | |
| 8o3 | 23000 | 240000 | 100000 | n.a. | | 130000 | | | | | 240000 | 190000 | 170000 | | |
| 9m3 | 26000 | 440000 | n.a. | 4100000 | | 7100 | | | | | 440000 | 2000000 | 1800000 | | |
| 9o3 | 30000 | 250000 | 96000 | n.a. | | 220000 | | | | | 270000 | 230000 | 390000 | | |

**Table 2 Continued**

| Code No. | Pseudomonas aeruginosa (ATCC 9027) 420000 CFU/g | | | | | Staphylococcus aureus (ATCC 6538) 310000 CFU/g | | | | |
|---|---|---|---|---|---|---|---|---|---|---|
| Microbe count/ Time | 2d | 7d | 14d | 21d | 28d | 2d | 7d | 14d | 21d | 28d |
| 1m1 | | | | | | | | | | |
| 1o1 | | | | | | | | | | |
| 1m3 | <100 | <100 | <100 | <100 | <100 | <100 | <100 | <100 | <100 | <100 |
| 103 | <100 | <100 | <100 | <100 | <100 | 180000 | 2100 | <100 | <100 | <100 |
| 3m3 | <100 | <100 | <100 | <100 | <100 | <100 | <100 | <100 | <100 | <100 |
| 3o3 | <100 | <100 | <100 | <100 | <100 | <100 | <100 | <100 | <100 | <100 |
| 4m3 | <100 | <100 | <100 | <100 | <100 | 300 | <100 | <100 | <100 | <100 |
| 4o3 | <100 | <100 | <100 | <100 | <100 | 100 | <100 | <100 | <100 | <100 |
| 5m3 | <100 | <100 | <100 | | | 500 | <100 | | | |
| 5o3 | <100 | <100 | <100 | <100 | <100 | 1400 | <100 | <100 | <100 | <100 |
| 6m3 | <100 | <100 | <100 | | | 700 | <100 | <100 | | |
| 6o3 | <100 | <100 | <100 | | | 9200 | <100 | <100 | | |
| 7m3 | <100 | <100 | <100 | | | <100 | <100 | | | |
| 7o3 | <100 | <100 | <100 | | | <100 | <100 | <100 | | |
| 8m3 | n.a. | 1200000 | | | | 110000 | <100 | <100 | | |
| 8o3 | n.a. | 3000000 | 2600000 | | | 100000 | <100 | 100 | | |
| 9m3 | | 7000000 | 4900000 | | | 160000 | 900 | 180000 | | |
| 9o3 | n.a. | 7000000 | 4200000 | | | 110000 | 2100 | 79000 | | |

The respective samples were retested for their pH after 31 days. The results are shown in Table 3.

**Table 3**

| **pH Regulator** | **w/without Sokalan^{®} NR2555** | **pH (t=0)** | **Sample code** | **Test end pH (t=31d)** |
|---|---|---|---|---|
| | | | | |
| **AMP^{®} Angus** | with | 11,0 | 1 m 3 | 10,3 |
| | without | 11,0 | 1 O 3 | 10,2 |
| ***none*** | *with* | 8,5 | *1m1* | 8,6 |
| *NaOH 25%* | *with* | 10,7 | *1o1* | 9,8 |
| **Lutron^{®} Q75** | with | 10,5 | 3 m 3 | 10,4 |
| | without | 10,6 | 3 O 3 | 10,1 |
| **Cycloquart^{®}** | with | 11,0 | 4 m 3 | 9,2 |
| | without | 11,3 | 4 O 3 | 9,3 |
| **Silres^{®} BS16** | with | 11,0 | 5 m 3 | 9,9 |
| | without | 11,0 | 5 O 3 | 10,2 |
| **Vetrosil^{®} OF** | with | 11,0 | 6 m 3 | 10,7 |
| | without | 11,0 | 6 O 3 | 10,6 |
| **Hyporan^{®} 10** | with | 11,1 | 7 m 3 | 10,7 |
| | without | 11,0 | 7 O 3 | 9,9 |
| **NaOH 25%** | with | 11,0 | 8 m 3 | 9,4 |
| | without | 11,2 | 8 O 3 | 10,0 |
| **KOH 25%** | with | 11,1 | 9 m 3 | 9,3 |
| | without | 11,1 | 9 O 3 | 9,2 |

Although for all samples the pH level reduced after 4 weeks testing, the chemicals with buffering effect (alkali metal silicates) retained the elevated pH level for longer and therefore illustrated a more effective germ reducing effect by comparison to the alkali metal hydroxides alone.

With the same level of addition, the alkali metal silicate solutions provided a similar bacteria reducing effect to the AMP^{®} Angus but using a more convenient and less expensive treatment program. This effect could not have been predicted.

A 2nd series of tests employed Calplex^{®} 2 of the company Calcit. The test mixture preparations were done with a standard paint filler type "2" Calplex^{®} 2, which is a chemically crystalline marble. To half of the samples 0.3 g Sokalan^{®} NR 2555 was added as a dispersing agent. For all samples pH adjustments to the target level pH 11 were done with the same pH regulation chemicals. This is illustrated in Table 4.

**Table 4**

| **pH Regulator** | **With/without Sokalan^{®} 2555** | **pH of slurry without Regulator** | **Resulting pH** | **Amou nt [g]** |
|---|---|---|---|---|
| | | | | |
| AMP^{®} Angus | With | 8,5 | 11,0 | 0,8g/110,0g |
| | Without | 8,5 | 11,0 | 0,4g/106,0g |
| Lutron^{®} Q75 | With | 8,5 | 10,5 | 8,3g/110,0g |
| | Without | 8,5 | 10,7 | 5,1g/100,0g |
| Cycloquart^{®} | With | 8,2 | 11,1 | 0,4g/115,0g |
| | Without | 8,4 | 11,0 | 0,4g/100,0g |
| Silres^{®} BS16 | With | 8,2 | 11,0 | 0,4g/115,0g |
| | Without | 8,4 | 11,0 | 0,3g/100,0g |
| Vetrosil^{®} OF | With | 8,5 | 11,0 | 0,6g/115,0g |
| | Without | 8,5 | 11,0 | 0,6g/108,0g |
| Hyporan^{®} 10 | With | 8,5 | 11,0 | 0,8g/115,0g |
| | Without | 8,6 | 11,0 | 0,4g/108,0g |
| NaOH 25% | With | 8,6 | 11,2 | 0,1g/115,0g |
| | Without | 8,6 | 11,2 | 0,1g/108,0g |
| KOH 25% | With | 8,6 | 11,1 | 0,1g/115,0g |
| | Without | 8,5 | 11,0 | 0,1g/110,0g |

The volumes of pH adjustment chemicals were about one third of the previous series, as amount of solids were less in the same range.

The results are shown in the following Table 5 and Table 6.

**Table 5**

| **pH Regulator** | **Code** | Pluralibacter gergoviae 470000 CFU/g | | | | | Escherichio coli LC Code 1383806: 450000 CFU/g | | | | |
|---|---|---|---|---|---|---|---|---|---|---|---|
| | | 2d | 7d | 14d | 21d | 28d | 2d | 7d | 14d | 21d | 28d |
| | | | | | | | | | | | |
| AMP Angus | 1m | < 100 | < 100 | < 100 | < 100 | < 100 | < 100 | < 100 | < 100 | < 100 | < 100 |
| | 1o | < 100 | < 100 | < 100 | < 100 | < 100 | 400 | < 100 | < 100 | < 100 | < 100 |
| Lutron Q75 | 3m | < 100 | < 100 | < 100 | < 100 | < 100 | < 100 | < 100 | < 100 | < 100 | < 100 |
| | 3o | < 100 | < 100 | < 100 | < 100 | < 100 | < 100 | < 100 | < 100 | < 100 | < 100 |
| Cycloquart | 4m | < 100 | < 100 | < 100 | < 100 | < 100 | < 100 | < 100 | < 100 | < 100 | < 100 |
| | 4o | 600 | 600 | 8000 | 230000 | 240000 | < 100 | < 100 | < 100 | < 100 | < 100 |
| Silres BS16 | 5m | < 100 | < 100 | < 100 | < 100 | < 100 | < 100 | < 100 | < 100 | < 100 | < 100 |
| | 5o | 100 | < 100 | 100 | 480000 | 5900000 | 300 | < 100 | < 100 | 10000 | 320000 |
| Vetrosil OF | 6m | < 100 | < 100 | < 100 | < 100 | < 100 | < 100 | < 100 | < 100 | < 100 | < 100 |
| | 6o | < 100 | < 100 | < 100 | < 100 | < 100 | 200 | < 100 | < 100 | < 100 | < 100 |
| Hyporan 10 | 7m | < 100 | < 100 | < 100 | < 100 | < 100 | < 100 | < 100 | < 100 | < 100 | < 100 |
| | 7o | < 100 | < 100 | < 100 | 32000 | na | < 100 | < 100 | < 100 | < 100 | < 100 |
| NaOH, 25% | 8m | 19000 | 31000 | 770000 | 360000 | 1200000 | 470000 | 1900000 | 11000000 | na | 9500000 |
| | 8o | 230000 | 240000 | 100000 | n.a. | 6900000 | 140000 | 190000 | 170000 | na | 450000 |
| KOH, 25% | 9m | 260000 | 440000 | n.a. | 4100000 | 2100000 | 440000 | 2000000 | 1800000 | na | 1200000 |
| | 9o | 300000 | 250000 | 96000 | n.a. | 8300000 | 270000 | 230000 | 390000 | 340000 | 170000 |

**Table 6**

| **pH Regulator** | **Code** | Pseudomonas aeruginosa LS Code 1383806: 400000 CFU/g | | | | | Staphylococcus aureus LS Code 1383806: 290000 CFU/g | | | | |
|---|---|---|---|---|---|---|---|---|---|---|---|
| | | 2d | 7d | 14d | 21d | 28d | 2d | 7d | 14d | 21d | 28d |
| | | | | | | | | | | | |
| AMP Angus | 1m | < 100 | < 100 | < 100 | < 100 | < 100 | < 100 | < 100 | < 100 | < 100 | < 100 |
| | 1o | < 100 | < 100 | < 100 | < 100 | < 100 | 180000 | 2100 | < 100 | < 100 | < 100 |
| Lutron Q75 | 3m | < 100 | < 100 | < 100 | < 100 | < 100 | < 100 | < 100 | < 100 | < 100 | < 100 |
| | 3o | < 100 | < 100 | < 100 | < 100 | < 100 | < 100 | < 100 | < 100 | < 100 | < 100 |
| Cycloquart | 4m | < 100 | < 100 | < 100 | < 100 | < 100 | 300 | < 100 | < 100 | < 100 | < 100 |
| | 4o | < 100 | < 100 | < 100 | < 100 | < 100 | 100 | < 100 | < 100 | < 100 | < 100 |
| Silres BS16 | 5m | < 100 | < 100 | < 100 | < 100 | < 100 | 500 | < 100 | < 100 | < 100 | < 100 |
| | 5o | < 100 | < 100 | < 100 | < 100 | < 100 | 1400 | < 100 | < 100 | < 100 | < 100 |
| Vetrosil OF | 6m | < 100 | < 100 | < 100 | < 100 | < 100 | 700 | < 100 | < 100 | < 100 | < 100 |
| | 6o | < 100 | < 100 | < 100 | < 100 | < 100 | 9200 | 100 | < 100 | < 100 | < 100 |
| Hyporan 10 | 7m | < 100 | < 100 | < 100 | < 100 | < 100 | < 100 | < 100 | < 100 | < 100 | < 100 |
| | 7o | < 100 | < 100 | < 100 | < 100 | < 100 | 1000 | < 100 | < 100 | < 100 | < 100 |
| NaOH, 25% | 8m | na | 12000000 | 15000000 | na | 10000000 | 110000 | < 100 | < 100 | < 100 | < 100 |
| | 8o | na | 3000000 | 2600000 | na | 2300000 | 100000 | < 100 | < 100 | < 100 | < 100 |
| KOH, 25% | 9m | na | 7000000 | 4900000 | na | 6000000 | 160000 | 900 | 180000 | 520000 | na |
| | 9o | na | 7000000 | 4200000 | na | 7000000 | 110000 | 2100 | 79000 | 120000 | 880000 |

These results demonstrate that the silicate solutions are as effective as AMP^{®} Angus but provide a more convenient and less expensive treatment. The results also showed that the silicate solutions are more effective than the pure alkali metal hydroxides. Further the silicate solutions are more effective than siliconate solution. The silicates are also less expensive than the siliconate.

In all cases the mixed addition with Sokalan^{®} gives better results than without the addition of Sokalan^{®}.

### Example 2

The following tests illustrate the pH stability of the present invention.

The following test work employs calcium carbonate slurries having pH adjusted to pH 10.5 with sodium silicate, potassium silicate, sodium hydroxide, amino-methyl-propanol.

### Test method

### Chemicals Used as an additive to adjust pH

| | |
|---|---|
| sodium silicate | Hyporan^{®} 10 |
| potassium silicate | Vetrosil^{®} OF |
| 2-amino-2-methyl-1-propanol | |
| sodium hydroxide | |

The calcium carbonate is Omyacarb^{®} 10-AV; 78% solids; 78.8% below 2 µm

### Base slurry prepared using:

| | |
|---|---|
| Polymer: | 0.8% Sokalan^{®} NR 2555 (active/weight) |
| Solids: | 78% |
| Particle size: | 78.8% below 2 µm; 35.1% below 1 µm |

The pH adjusting additive is added to the base slurry until a pH of 10.5 is reached. The control has no pH adjustment.

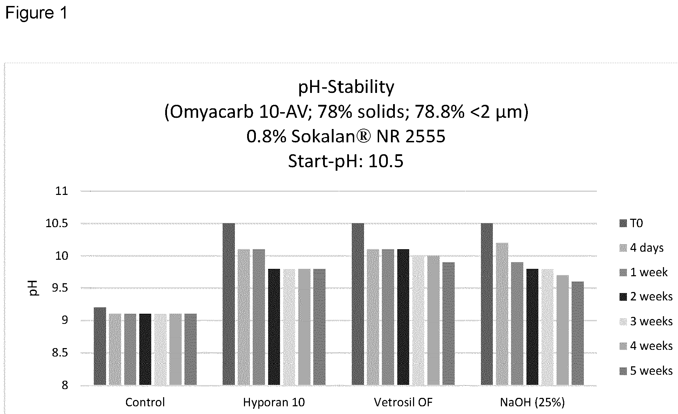

The pH stability is measured over 5 weeks and the results are presented in Table 7 and illustrated in Figure 1.

**Table 7**

| | | **Control** | **Hyporan^{®} 10** | **Vetrosil^{®} OF** | **NaOH (25%)** |
|---|---|---|---|---|---|
| Weight of additive to achieve pH 10,5 | [g] | | 0.454 | 0.589 | 0.194 |
| **pH-stability** | Initial pH | 9.2 | 10.5 | 10.5 | 10.5 |
| | 4 days | 9.1 | 10.1 | 10.1 | 10.2 |
| | 1 week | 9.1 | 10.1 | 10.1 | 9.9 |
| | 2 weeks | 9.1 | 9.8 | 10.1 | 9.8 |
| | 3 weeks | 9.1 | 9.8 | 10 | 9.8 |
| | 4 weeks | 9.1 | 9.8 | 10 | 9.7 |
| | 5 weeks | 9.1 | 9.8 | 9.9 | 9.6 |

## Claims

1. An aqueous pigment suspension in alkaline pH environment comprising:
a) at least one particulate white pigment;
b) at least one acrylic acid polymer, including salts thereof, having a weight average molecular weight Mw in the range from 1000 to 12,000 g/mol;
c) at least one alkali metal silicate; and
in which the aqueous pigment suspension has a pH in the range from 10 to below 12 and a solids content of at least 50 wt.-%, based on the total weight of the aqueous pigment suspension.

2. An aqueous pigment suspension according to claim 1, wherein the at least one particulate white pigment is selected from the group consisting of calcium carbonate, kaolin, china clay and titanium dioxide.

3. An aqueous pigment suspension according to claim 1 or claim 2, wherein the at least one particulate white pigment is ground calcium carbonate (GCC) and/or precipitated calcium carbonate (PCC).

4. An aqueous pigment suspension according to any one preceding claim, wherein the aqueous pigment suspension has a solids content of from 50 wt-% to 90 wt-%, based on the total weight of the aqueous pigment suspension.

5. An aqueous pigment suspension according to any one preceding claim, wherein the aqueous pigment suspension has a pH in the range from 10.5 to 11.9, preferably from 10.7 to 11.8, preferably from 11 to 11.8.

6. An aqueous pigment suspension according to any one preceding claim, wherein the at least one alkali metal silicate is lithium silicate and/or sodium silicate and/or potassium silicate.

7. An aqueous pigment suspension according to any one preceding claim, wherein the at least one acrylic acid polymer is a homopolymer of acrylic acid, including salts thereof, having a polydispersity index Mw/Mn ≤ 3, preferably ≤ 2.5.

8. An aqueous pigment suspension according to any one preceding claim, wherein the at least one acrylic acid polymer is/are derived from acrylic acid polymer(s) having 30% to 60% of the acid groups of the at least one acrylic acid polymer have been neutralised with calcium ions, 30% to 70% of the acid groups of the at least one acrylic acid polymer have been neutralised with sodium ions and 0% to 50%, preferably 0% to 20%, more preferably 0% to 10%, of the acid groups of the acrylic acid polymer have not been neutralised.

9. An aqueous pigment suspension according to any one preceding claim, in which the aqueous pigment suspension is substantially free of biocide.

10. An aqueous pigment suspension according to any one preceding claim, in which the aqueous pigment suspension is substantially resistant to bacterial growths.

11. A method for producing an aqueous pigment suspension as defined in claim 1, comprising the steps of:
combining with water:
i) the at least one particulate white pigment in an amount sufficient to provide a solids content of at least 50 wt.-%; based on the total weight of the aqueous pigment suspension
ii) at least one acrylic acid polymer, including salts thereof, having a weight average molecular weight Mw in the range from 1000 to 12,000 g/mol;
iii) at least one alkali metal silicate; and
iv) optionally sodium hydroxide and/or potassium hydroxide
in which i), ii), iii) and optionally iv) can be added in any order or in any combination and in which the amounts of iii) and optionally iv) are sufficient to provide a pH in the range from 10 to below 12.

12. A method according to claim 11, wherein the aqueous pigment suspension contains one or more features of any one of claims 2 to 10.

13. A method according to claim 11 or claim 12, wherein
i) the at least one particulate white pigment in an amount sufficient to provide a solids content of at least 50 wt-%; based on the total weight of the aqueous pigment suspension; and
ii) at least one acrylic acid polymer, including salts thereof, having a weight average molecular weight Mw in the range from 1000 to 12,000 g/mol
are combined with water to form an initial suspension;
the pH of the initial suspension is adjusted by the addition of the iii) at least one alkali metal silicate to provide the aqueous pigment suspension having a pH of from 10 to below 12.

14. A method according to claim 11 or claim 12, wherein
i) the at least one particulate white pigment in an amount sufficient to provide a solids content of at least 50 wt.-%; based on the total weight of the aqueous pigment suspension; and
ii) at least one acrylic acid polymer, including salts thereof, having a weight average molecular weight Mw in the range from 1000 to 12,000 g/mol
are combined with water to form an initial suspension;
the pH of the initial suspension is adjusted to a pH of at least 9.5 by the addition of the iv) sodium hydroxide and/or potassium hydroxide to form a pH adjusted suspension;
and to the pH adjusted suspension addition of the iii) at least one alkali metal silicate to provide the aqueous pigment suspension having a pH of from 10 to below 12.

15. A method according to claim 11 or claim 12, wherein
i) the at least one particulate white pigment in an amount sufficient to provide a solids content of at least 50 wt.-%; based on the total weight of the aqueous pigment suspension; and
ii) at least one acrylic acid polymer, including salts thereof, having a weight average molecular weight Mw in the range from 1000 to 12,000 g/mol
are combined with water to form an initial suspension;
wherein the pH of the initial suspension is adjusted to a pH of at least 9.5 by addition of the iii) at least one alkali metal silicate to form a pH adjusted suspension; and the pH adjusted suspension the iv) sodium hydroxide and/or potassium hydroxide is added in an amount to provide the aqueous pigment suspension having a pH of from 10 to below 12.

16. A treatment system for producing a stable aqueous pigment suspension resistant against bacterial growths,
in which the aqueous pigment suspension comprises at least one particulate white pigment a pH in the range from 10 to below 12 and has a solids content of at least 50 wt.-%, based on the total weight of the aqueous pigment suspension,
and in which the treatment system comprises:
A) at least one acrylic acid polymer, including salts thereof, having a weight average molecular weight Mw in the range from 1000 to 12,000 g/mol;
B) at least one alkali metal silicate; and
C) optionally sodium hydroxide and/or potassium hydroxide.

17. Use of a treatment system for producing a stable aqueous pigment suspension resistant against bacterial growths,
in which the aqueous pigment suspension comprises at least one particulate white pigment a pH in the range from 10 to below 12 and has a solids content of at least 50 wt-%, based on the total weight of the aqueous pigment suspension,
and in which the treatment system comprises:
A) at least one acrylic acid polymer, including salts thereof, having a weight average molecular weight Mw in the range from 1000 to 12,000 g/mol;
B) at least one alkali metal silicate; and
C) optionally sodium hydroxide and/or potassium hydroxide.

## Patentansprüche

1. Wässrige Pigmentsuspension in alkalischer pH-Umgebung, umfassend:
a) mindestens ein teilchenförmiges Weißpigment;
b) mindestens ein Acrylsäurepolymer, einschließlich Salzen davon, mit einem gewichtsmittleren Molekulargewicht Mw im Bereich von 1000 bis 12.000 g/mol;
c) mindestens ein Alkalimetallsilikat; und
wobei die wässrige Pigmentsuspension einen pH-Wert im Bereich von 10 bis unter 12 und einen Feststoffgehalt von mindestens 50 Gew.-%, bezogen auf das Gesamtgewicht der wässrigen Pigmentsuspension, aufweist.

2. Wässrige Pigmentsuspension nach Anspruch 1, wobei das mindestens eine teilchenförmige Weißpigment aus der Gruppe bestehend aus Calciumcarbonat, Kaolin, China Clay und Titandioxid ausgewählt ist.

3. Wässrige Pigmentsuspension nach Anspruch 1 oder Anspruch 2, wobei es sich bei dem mindestens einen teilchenförmigen Weißpigment um gemahlenes Calciumcarbonat (Ground Calcium Carbonate, GCC) und/oder ausgefälltes Calciumcarbonat (Precipitated Calcium Carbonate, PCC) handelt.

4. Wässrige Pigmentsuspension nach einem der vorhergehenden Ansprüche, wobei die wässrige Pigmentsuspension einen Feststoffgehalt von 50 Gew.-% bis 90 Gew.-%, bezogen auf das Gesamtgewicht der wässrigen Pigmentsuspension, aufweist.

5. Wässrige Pigmentsuspension nach einem der vorhergehenden Ansprüche, wobei die wässrige Pigmentsuspension einen pH-Wert im Bereich von 10,5 bis 11,9, vorzugsweise von 10,7 bis 11,8, vorzugsweise von 11 bis 11,8, aufweist.

6. Wässrige Pigmentsuspension nach einem der vorhergehenden Ansprüche, wobei es sich bei dem mindestens einen Alkalimetallsilikat um Lithiumsilikat und/oder Natriumsilikat und/oder Kaliumsilikat handelt.

7. Wässrige Pigmentsuspension nach einem der vorhergehenden Ansprüche, wobei es sich bei dem mindestens einen Acrylsäurepolymer um ein Homopolymer von Acrylsäure, einschließlich Salzen davon, mit einem Polydispersitätsindex MW/Mn ≤ 3, vorzugsweise ≤ 2,5, handelt.

8. Wässrige Pigmentsuspension nach einem der vorhergehenden Ansprüche, wobei das mindestens eine Acrylsäurepolymer von Acrylsäurepolymer(en) abgeleitet ist/sind, wobei 30 % bis 60 % der Säuregruppen des mindestens einen Acrylsäurepolymers mit Calciumionen neutralisiert sind, 30 % bis 70 % der Säuregruppen des mindestens einen Acrylsäurepolymers mit Natriumionen neutralisiert sind und 0 % bis 50 %, vorzugsweise 0 % bis 20 %, weiter bevorzugt 0 % bis 10 %, der Säuregruppen des Acrylsäurepolymers nicht neutralisiert sind.

9. Wässrige Pigmentsuspension nach einem der vorhergehenden Ansprüche, wobei die wässrige Pigmentsuspension weitgehend frei von Biozid ist.

10. Wässrige Pigmentsuspension nach einem der vorhergehenden Ansprüche, wobei die wässrige Pigmentsuspension weitgehend resistent gegenüber Bakterienwachstum ist.

11. Verfahren zur Herstellung einer wässrigen Pigmentsuspension gemäß Anspruch 1, umfassend die Schritte:
Vereinigen:
i) des mindestens einen teilchenförmigen Weißpigments in einer Menge, die ausreicht, um einen Feststoffgehalt von mindestens 50 Gew.-%; bezogen auf das Gesamtgewicht der wässrigen Pigmentsuspension, bereitzustellen;
ii) mindestens eines Acrylsäurepolymers, einschließlich Salzen davon, mit einem gewichtsmittleren Molekulargewicht Mw im Bereich von 1000 bis 12.000 g/mol;
iii) mindestens einem Alkalimetallsilikat; und
iv) gegebenenfalls Natriumhydroxid und/oder Kaliumhydroxid
mit Wasser, wobei i), ii), iii) und gegebenenfalls iv) in beliebiger Reihenfolge oder in beliebiger Kombination zugegeben werden können und wobei die Mengen von iii) und gegebenenfalls iv) ausreichen, um einen pH-Wert im Bereich von 10 bis unter 12 bereitzustellen.

12. Verfahren nach Anspruch 11, wobei die wässrige Pigmentsuspension ein oder mehrere Merkmale eines der Ansprüche 2 bis 10 enthält.

13. Verfahren nach Anspruch 11 oder Anspruch 12, wobei
i) das mindestens eine teilchenförmige Weißpigment in einer Menge, die ausreicht, um einen Feststoffgehalt von mindestens 50 Gew.-%; bezogen auf das Gesamtgewicht der wässrigen Pigmentsuspension, bereitzustellen; und
ii) mindestens ein Acrylsäurepolymer, einschließlich Salzen davon, mit einem gewichtsmittleren Molekulargewicht Mw im Bereich von 1000 bis 12.000 g/mol mit Wasser zu einer Ausgangssuspension vereinigt werden; der pH-Wert der Ausgangssuspension durch Zugabe von iii) mindestens einem Alkalimetallsilikat eingestellt wird, um die wässrige Pigmentsuspension mit einem pH-Wert von 10 bis unter 12 bereitzustellen.

14. Verfahren nach Anspruch 11 oder Anspruch 12, wobei
i) das mindestens eine teilchenförmige Weißpigment in einer Menge, die ausreicht, um einen Feststoffgehalt von mindestens 50 Gew.-%; bezogen auf das Gesamtgewicht der wässrigen Pigmentsuspension, bereitzustellen; und
ii) mindestens ein Acrylsäurepolymer, einschließlich Salzen davon, mit einem gewichtsmittleren Molekulargewicht Mw im Bereich von 1000 bis 12.000 g/mol mit Wasser zu einer Ausgangssuspension vereinigt werden; der pH-Wert der Ausgangssuspension durch Zugabe des iv) Natriumhydroxids und/oder Kaliumhydroxids auf einen pH-Wert von mindestens 9,5 eingestellt wird, um eine pHeingestellte Suspension zu bilden; und das iii) mindestens eine Alkalimetallsilikat zu der pH-eingestellten Suspension gegeben wird, um die wässrige Pigmentsuspension mit einem pH-Wert von 10 bis unter 12 bereitzustellen.

15. Verfahren nach Anspruch 11 oder Anspruch 12, wobei
i) das mindestens eine teilchenförmige Weißpigment in einer Menge, die ausreicht, um einen Feststoffgehalt von mindestens 50 Gew.-%; bezogen auf das Gesamtgewicht der wässrigen Pigmentsuspension, bereitzustellen; und
ii) mindestens ein Acrylsäurepolymer, einschließlich Salzen davon, mit einem gewichtsmittleren Molekulargewicht Mw im Bereich von 1000 bis 12.000 g/mol mit Wasser zu einer Ausgangssuspension vereinigt werden; wobei der pH-Wert der Ausgangssuspension durch Zugabe des iii) mindestens einen Alkalimetallsilikats auf einen pH-Wert von mindestens 9,5 eingestellt wird, um eine pHeingestellte Suspension zu bilden; und das iv) Natriumhydroxid und/oder Kaliumhydroxid in einer Menge zu der pH-eingestellten Suspension gegeben wird, um die wässrige Pigmentsuspension mit einem pH-Wert von 10 bis unter 12 bereitzustellen.

16. Behandlungssystem zur Herstellung einer stabilen wässrigen Pigmentsuspension, die gegenüber Bakterienwachstum resistent ist,
wobei die wässrige Pigmentsuspension mindestens ein teilchenförmiges Weißpigment umfasst, einen pH-Wert im Bereich von 10 bis unter 12 und einen Feststoffgehalt von mindestens 50 Gew.-%, bezogen auf das Gesamtgewicht der wässrigen Pigmentsuspension, aufweist,
und wobei das Behandlungssystem Folgendes umfasst:
A) mindestens ein Acrylsäurepolymer, einschließlich Salzen davon, mit einem gewichtsmittleren Molekulargewicht Mw im Bereich von 1000 bis 12.000 g/mol;
B) mindestens ein Alkalimetallsilikat; und
C) gegebenenfalls Natriumhydroxid und/oder Kaliumhydroxid.

17. Verwendung eines Behandlungssystems zur Herstellung einer stabilen wässrigen Pigmentsuspension, die gegenüber Bakterienwachstum resistent ist,
wobei die wässrige Pigmentsuspension mindestens ein teilchenförmiges Weißpigment umfasst, einen pH-Wert im Bereich von 10 bis unter 12 und einen Feststoffgehalt von mindestens 50 Gew.-%, bezogen auf das Gesamtgewicht der wässrigen Pigmentsuspension, aufweist,
und wobei das Behandlungssystem Folgendes umfasst:
A) mindestens ein Acrylsäurepolymer, einschließlich Salzen davon, mit einem gewichtsmittleren Molekulargewicht Mw im Bereich von 1000 bis 12.000 g/mol;
B) mindestens ein Alkalimetallsilikat; und
C) gegebenenfalls Natriumhydroxid und/oder Kaliumhydroxid.

## Revendications

1. Suspension aqueuse de pigment dans un environnement à pH alcalin comprenant :
a) au moins un pigment blanc particulaire ;
b) au moins un polymère d'acide acrylique, y compris ses sels, ayant un poids moléculaire moyen en poids Mw dans la plage de 1 000 à 12 000 g/mole ;
c) au moins un silicate de métal alcalin ; et
dans laquelle la suspension aqueuse de pigment a un pH dans la plage de 10 à moins de 12 et une teneur en solides d'au moins 50 % en poids, sur la base du poids total de la suspension aqueuse de pigment.

2. Suspension aqueuse de pigment selon la revendication 1, dans laquelle l'au moins un pigment blanc particulaire est choisi dans le groupe constitué par le carbonate de calcium, le kaolin, l'argile de Chine et le dioxyde de titane.

3. Suspension aqueuse de pigment selon la revendication 1 ou la revendication 2, dans laquelle l'au moins un pigment blanc particulaire est du carbonate de calcium broyé (GCC) et/ou du carbonate de calcium précipité (PCC).

4. Suspension aqueuse de pigment selon l'une quelconque des revendications précédentes, dans laquelle la suspension aqueuse de pigment a une teneur en solides de 50 % en poids à 90 % en poids, sur la base du poids total de la suspension aqueuse de pigment.

5. Suspension aqueuse de pigment selon l'une quelconque des revendications précédentes, dans laquelle la suspension aqueuse de pigment a un pH dans la plage de 10,5 à 11,9, de préférence de 10,7 à 11,8, de préférence de 11 à 11,8.

6. Suspension aqueuse de pigment selon l'une quelconque des revendications précédentes, dans laquelle l'au moins un silicate de métal alcalin est le silicate de lithium et/ou le silicate de sodium et/ou le silicate de potassium.

7. Suspension aqueuse de pigment selon l'une quelconque des revendications précédentes, dans laquelle l'au moins un polymère d'acide acrylique est un homopolymère d'acide acrylique, y compris ses sels, ayant un indice de polydispersité Mw/Mn ≤ 3, de préférence ≤ 2,5.

8. Suspension aqueuse de pigment selon l'une quelconque des revendications précédentes, dans laquelle l'au moins un polymère d'acide acrylique est/sont dérivé(s) de polymère(s) d'acide acrylique ayant 30 % à 60 % des groupes acide de l'au moins un polymère d'acide acrylique qui ont été neutralisés avec des ions calcium, 30 % à 70 % des groupes acide de l'au moins un polymère d'acide acrylique qui ont été neutralisés avec des ions sodium et 0 % à 50 %, de préférence 0 % à 20 %, plus préférablement 0 % à 10 %, des groupes acide du polymère d'acide acrylique qui n'ont pas été neutralisés.

9. Suspension aqueuse de pigment selon l'une quelconque des revendications précédentes, dans laquelle la suspension aqueuse de pigment est sensiblement exempte de biocide.

10. Suspension aqueuse de pigment selon l'une quelconque des revendications précédentes, dans laquelle la suspension aqueuse de pigment est sensiblement résistante à des croissances bactériennes.

11. Procédé de production d'une suspension aqueuse de pigment telle que définie dans la revendication 1, comprenant les étapes de :
combinaison avec de l'eau :
i) de l'au moins un pigment blanc particulaire en une quantité suffisante pour fournir une teneur en solides d'au moins 50 % en poids, sur la base du poids total de la suspension aqueuse de pigment
ii) d'au moins un polymère d'acide acrylique, y compris ses sels, ayant un poids moléculaire moyen en poids Mw dans la plage de 1 000 à 12 000 g/mole ;
iii) au moins un silicate de métal alcalin ; et
iv) éventuellement de l'hydroxyde de sodium et/ou hydroxyde de potassium
dans laquelle i), ii), iii) et éventuellement iv) peuvent être ajoutés dans un ordre quelconque ou dans une combinaison quelconque et dans laquelle les quantités de iii) et éventuellement iv) sont suffisantes pour fournir un pH dans la plage de 10 à moins de 12.

12. Procédé selon la revendication 11, dans lequel la suspension aqueuse de pigment contient une ou plusieurs caractéristiques selon l'une quelconque des revendications 2 à 10.

13. Procédé selon la revendication 11 ou la revendication 12, dans lequel
i) l'au moins un pigment blanc particulaire en une quantité suffisante pour fournir une teneur en solides d'au moins 50 % en poids, sur la base du poids total de la suspension aqueuse de pigment ; et
ii) au moins un polymère d'acide acrylique, y compris ses sels, ayant un poids moléculaire moyen en poids Mw dans la plage de 1 000 à 12 000 g/mole
sont combinés avec de l'eau pour former une suspension initiale ;
le pH de la suspension initiale est ajusté par ajout de iii) au moins un silicate de métal alcalin pour obtenir la suspension aqueuse de pigment ayant un pH de 10 à moins de 12.

14. Procédé selon la revendication 11 ou la revendication 12, dans lequel
i) l'au moins un pigment blanc particulaire en une quantité suffisante pour fournir une teneur en solides d'au moins 50 % en poids, sur la base du poids total de la suspension aqueuse de pigment ; et
ii) au moins un polymère d'acide acrylique, y compris ses sels, ayant un poids moléculaire moyen en poids Mw dans la plage de 1 000 à 12 000 g/mole
sont combinés avec de l'eau pour former une suspension initiale ;
le pH de la suspension initiale est ajusté jusqu'à un pH d'au moins 9,5 par ajout de iv) d'hydroxyde de sodium et/ou d'hydroxyde de potassium pour former une suspension à pH ajusté ; et à la suspension à pH ajusté, ajout de iii) au moins un silicate de métal alcalin pour obtenir la suspension pigmentaire aqueuse ayant un pH de 10 à moins de 12.

15. Procédé selon la revendication 11 ou la revendication 12, dans lequel
i) l'au moins un pigment blanc particulaire en une quantité suffisante pour fournir une teneur en solides d'au moins 50 % en poids, sur la base du poids total de la suspension aqueuse de pigment ; et
ii) au moins un polymère d'acide acrylique, y compris ses sels, ayant un poids moléculaire moyen en poids Mw dans la plage de 1 000 à 12 000 g/mole
sont combinés avec de l'eau pour former une suspension initiale ;
dans lequel le pH de la suspension initiale est ajusté jusqu'à un pH d'au moins 9,5 par ajout de iii) l'au moins un silicate de métal alcalin pour former une suspension à pH ajusté ; et la suspension à pH ajusté de iv) l'hydroxyde de sodium et/ou de l'hydroxyde de potassium est ajouté en une quantité pour fournir la suspension aqueuse de pigment ayant un pH de 10 à moins de 12.

16. Système de traitement pour la production d'une suspension aqueuse stable de pigment résistante à des croissances bactériennes,
dans lequel la suspension aqueuse de pigment comprend au moins un pigment blanc particulaire, un pH dans la plage de 10 à moins de 12 et présente une teneur en solides d'au moins 50 % en poids, sur la base du poids total de la suspension aqueuse de pigment,
et dans lequel le système de traitement comprend :
A) au moins un polymère d'acide acrylique, y compris ses sels, ayant un poids moléculaire moyen en poids Mw dans la plage de 1 000 à 12 000 g/mole ;
B) au moins un silicate de métal alcalin ; et
C) éventuellement de l'hydroxyde de sodium et/ou hydroxyde de potassium.

17. Utilisation d'un système de traitement pour la production d'une suspension aqueuse stable de pigment résistante à des croissances bactériennes,
dans laquelle la suspension aqueuse de pigment comprend au moins un pigment blanc particulaire, un pH dans la plage de 10 à moins de 12 et présente une teneur en solides d'au moins 50 % en poids, sur la base du poids total de la suspension aqueuse de pigment,
et dans lequel le système de traitement comprend :
A) au moins un polymère d'acide acrylique, y compris ses sels, ayant un poids moléculaire moyen en poids Mw dans la plage de 1 000 à 12 000 g/mole ;
B) au moins un silicate de métal alcalin ; et
C) éventuellement de l'hydroxyde de sodium et/ou hydroxyde de potassium.
